# EUROPÄISCHE PATENTSCHRIFT

(11) **EP 3 281 541 B1**
(45) Veröffentlichungstag und Bekanntmachung des Hinweises auf die Patenterteilung: **06.07.2022**
(21) Anmeldenummer: 17183462.5
(22) Anmeldetag: 27.07.2017
(51) Int. Cl.: A41D 31/00, B32B 3/02, B32B 3/08

(54) **FLEXIBLE SCHICHTANORDNUNG**
FLEXIBLE LAYER ARRANGEMENT
SYSTÈME DE COUCHE SOUPLE

(30) Priorität: 09.08.2016 DE 102016114762
(43) Veröffentlichungstag der Anmeldung: 14.02.2018
(73) Patentinhaber: Uni&Forma d.o.o., 1236 Trzin (SI)
(72) Erfinder: Wagner, Armin, 83043 Bad Aibling (DE)
(74) Vertreter: Beckord & Niedlich Patentanwälte PartG mbB

(56) Entgegenhaltungen:
- EP-A1- 0 314 391
- US-A- 4 884 303
- US-A- 5 498 472
- US-A- 5 657 497
- US-A1- 2014 250 575
- US-A1- 2015 290 901

## Beschreibung

Die Erfindung betrifft eine flexible Schichtanordnung mit mehreren Wärmeisolationselementen, ein Verfahren zu deren Herstellung und deren Verwendung sowie ein Bekleidungsstück mit einer solchen Schichtanordnung und ein Verfahren zu dessen Herstellung. Bekleidungsstücke wie Jacken, Mäntel, Hosen, Overalls und dergleichen sind gebräuchliche Gegenstände des Alltags sowohl zu Arbeits- als auch zu Freizeitzwecken. Gerade bei kalten Temperaturen kommt es darauf an, dass die Bekleidung eine ausreichende Wärmeisolation bereitstellt, um ein Auskühlen des Körpers zu vermeiden. Passive Wärmeisolation in der Bekleidung basiert derzeit darauf, dass trockene Luftpolster in den Bekleidungsschichten eingelagert werden, die als Isolatoren fungieren. Dafür werden in aller Regel sogenannte Microfleece-, Vlies-, oder Daunenmaterialien eingesetzt, die eine Faserstruktur aus Hohlfasern mit Lufteinschlüssen aufweisen. Dadurch (nicht nur, aber auch durch die Hohlfaserstruktur) werden voluminöse Flächengebilde aufgebaut, die zusammen für einen großen Lufteinschluss sorgen. Diese voluminöse Struktur speichert also möglichst dauerhaft möglichst viel bevorzugt trockene Luft, die den Körper als Luftpolster bzw. Luftschicht umgibt und mitgetragen bzw. mitbewegt wird. Durch die mitgeführte Luft wird im Bekleidungssystem eine Wärmedämmung aufgebaut, die verhindert, dass Körperwärme abgeleitet wird, was sonst zur Auskühlung führen würde.

Wird allerdings die Dicke des isolierenden Luftpolsters verringert, nimmt auch die Isolationswirkung entsprechend ab. Ebendies tritt ein, wenn das Luftpolster in einer Richtung der Fläche der Isolierschicht gedehnt wird. Denn bei gleichbleibendem Volumen muss die Dicke abnehmen, wenn das Polster mit einer zur Dicke senkrechten Richtungskomponente gestreckt bzw. verformt wird. Das heißt, jede Dehnung eines voluminösen Flächengebildes führt unwillkürlich dazu, dass die Dicke, die ursprünglich senkrecht zur Dehnungsrichtung vorliegt, reduziert wird. Infolgedessen ist es bislang nicht möglich elastische Bereiche in die Bekleidung einzubauen, ohne dass dort die Wärmeisolation reduziert würde.

Das Dokument US 2014/250575 offenbart eine flexible Schichtanordnung gemäß dem Oberbegriff des Anspruchs 1.

Es ist daher eine Aufgabe der vorliegenden Erfindung, eine alternative Wärmeisolierung anzugeben, die auch bei Dehnung eine gute Isolationswirkung aufweist.

Diese Aufgabe wird durch eine flexible Schichtanordnung nach Patentanspruch 1, ein Verfahren zu deren Herstellung nach Patentanspruch 13, deren Verwendung nach Patentanspruch 15 sowie ein Bekleidungsstück mit einer Anzahl solcher Schichtanordnungen nach Patentanspruch 12 und ein Verfahren zu dessen Herstellung nach Patentanspruch 14 gelöst.

Die eingangs genannte flexible Schichtanordnung, umfasst mehrere Wärmeisolationselemente. Dabei werden zumindest zwei Wärmeisolationselemente, die verschiedenen Schichten der Schichtanordnung zugeordnet sind, zwischen einer Normalstellung der Schichtanordnung und einer Dehnungsstellung der Schichtanordnung in einer Dehnungsrichtung gegeneinander verschoben. Des Weiteren überlappen sich die Wärmeisolationselemente sowohl in der Normalstellung der Schichtanordnung als auch in der Dehnungsstellung der Schichtanordnung.

Die Schichten sind dabei flächige Strukturen, d. h. sie weisen in Richtung ihrer Fläche vergleichsweise große Abmessungen auf, wohingegen ihre Ausdehnung in einer Richtung senkrecht zur Fläche, also ihre Dicke, verhältnismäßig gering ist. Eine Schicht weist also zwei flächige Seiten auf. Die Schichten der Schichtanordnung erstrecken sich im Wesentlichen parallel zueinander, d. h. sie weisen mit ihren flächigen Seiten zueinander. Sie müssen sich dabei nicht lediglich in einer Ebene erstrecken, sondern können auch gewölbt sein. In zumindest zwei dieser Schichten sind die Wärmeisolationselemente so angeordnet, dass ein Überlapp zwischen den Wärmeisolationselementen der verschiedenen Schichten entsteht. Sie überdecken sich also derart, dass sie aus einer Sicht senkrecht zu den flächigen Seiten eine geschlossene Fläche bilden. Die Wärmeisolationselemente der beiden Schichten decken also gemeinsam einen größeren Bereich ab. Die Größe des Bereichs des Überlapps wird verändert, wenn die Schichtanordnung von der Normalstellung in die Dehnungsstellung gebracht wird oder umgekehrt. Es bleibt jedoch in jedem Fall ein gewisser Überdeckungsbereich bestehen. Das heißt, dass auch bei einer Verschiebung der Wärmeisolationselemente zwischen der Normalstellung und der Dehnungsstellung keine Lücke zwischen den Wärmeisolationselementen entsteht. Dementsprechend sind die Wärmeisolationselemente auch nur in diesem definierten Bereich verschiebbar.

Die Normalstellung der Schichtanordnung kennzeichnet eine Ruheposition, in der die Schichtanordnung im Wesentlichen entspannt ist. Das heißt ohne eine äußere Krafteinwirkung befindet sich die Schichtanordnung in der Ruheposition oder kehrt in diese zurück. Durch eine äußere Krafteinwirkung, z. B. durch das Beugen eines Gelenks eines Benutzers bzw. Trägers des Bekleidungsstücks, kann die Schichtanordnung jedoch in ihre Dehnungsstellung gebracht werden. Durch die Kraft wird die Schichtanordnung gedehnt, d. h. sie erfährt eine Längenänderung im Verhältnis zu ihrer ursprünglichen Länge, also ihrer Länge in Ruheposition. Die Länge der Schichtanordnung ist dabei ihre Abmessung in Dehnungsrichtung. Der Begriff Dehnung umfasst sowohl eine positive Dehnung, also eine Streckung, als auch eine negative Dehnung, also eine Stauchung.

Die Dehnungsrichtung ist durch die Richtung der Verschiebung der Wärmeisolationselemente zwischen der Normalstellung und der Dehnungsstellung definiert. Sie ist parallel zu den flächigen Seiten. Das heißt zugleich auch, dass die Wärmeisolationselemente zwischen der Normalstellung und der Dehnungsstellung parallel zueinander verschoben werden.

Als Wärmeisolationselemente können im Rahmen der Erfindung grundsätzlich solche flächige Strukturen verwendet werden, die eine gute Wärmeisolation aufweisen. Bevorzugt ist ein Wärmeisolationswert eines verwendeten Materials R_{ct} größer als 0,3, besonders bevorzugt größer als 0,32. Beispielsweise weist ein Isolationsvlies aus Polyesterfasern mit einem Flächengewicht von 110 g/m² einen Wärmeisolationswert R_{ct} > 0,325 oder ein Polyesterfaservlies mit einem Flächengewicht von 145 g/m² einen Wärmeisolationswert R_{ct} > 0,397 auf (gemessen mit DIN EN 31092). Als Wärmeisolation wird dabei allgemein die inverse Wärmeleitfähigkeit definiert. Ein zweckdienliches und vom Gewicht her leichtes Beispiel für Wärmeisolationselemente stellen Luftpolster dar. Diese können u. a. beispielsweise als Daunenfutter oder Kunstfaservlies ausgeführt sein, wie eingangs bereits beschrieben wurde.

Gegenüber dem Stand der Technik grenzt sich die erfindungsgemäße Schichtanordnung dadurch ab, dass bei einer Dehnung der Schichtanordnung insgesamt gerade nicht die Wärmeisolationselemente gedehnt werden. Die erfindungsgemäße Schichtanordnung gewährleistet somit vorteilhafterweise eine Dehnbarkeit, ohne die Wärmeisolationselemente zu dehnen, was, wie eingangs bereits erläutert, zu einer nachteiligen Verringerung der Wärmeisolationsfähigkeit führen würde. Die Dicke der Wärmeisolationselemente bleibt zur wirksamen Wärmeisolation erfindungsgemäß somit permanent erhalten.

Die erfindungsgemäße flexible Schichtanordnung stellt somit dehnbare Bereiche mit gleichbleibend guter Wärmeisolation bereit. Sie ermöglicht dadurch eine Wärmeisolation auch an Stellen, die hohe Anforderungen an die Beweglichkeit stellen. Deshalb wird eine Anzahl von erfindungsgemäßen flexiblen Schichtanordnungen erfindungsgemäß zur Wärmeisolation in Bekleidungsstücken verwendet. Dabei sind die Schichtanordnungen vorzugsweise in Dehnungsbereichen, insbesondere Gelenkbereichen, des Bekleidungsstücks angeordnet. Vor allem in den Dehnungsbereichen wird dadurch sowohl eine gute Wärmeisolation als auch größtmögliche Beweglichkeit gewährleistet.

Dementsprechend umfasst ein erfindungsgemäßes Bekleidungsstück eine Anzahl von erfindungsgemäßen Schichtanordnungen. Eine Außenschicht des Bekleidungsstücks besteht dabei bevorzugt aus einem widerstandsfähigen Obermaterial, das besonders bevorzugt winddicht, wasserabweisend und atmungsaktiv ist. Eine Futterschicht des Bekleidungsstücks ist vorzugsweise so ausgestaltet, dass sich der Tragekomfort erhöht, d. h. sie verhindert ein Scheuern des Bekleidungsstücks und ermöglicht eine ausgleichende Transpiration. Bei einer bevorzugten Variante des erfindungsgemäßen Bekleidungsstücks werden die Futterschicht und die Außenschicht durch die Schichtanordnung gebildet, wie später noch näher erläutert wird. Prinzipiell könnten die Schichtanordnungen aber auch zwischen einer Außenschicht und einer Futterschicht angeordnet sein.

Das Bekleidungsstück kann dabei grundsätzlich Kleidung für jegliche Extremitäten, Körper und/oder Kopf sein und auch für jegliche Kleidungsschicht von Unterkleidung bis Überkleidung bestimmt sein. Insbesondere ist das Bekleidungsstück aber ein Überbekleidungsstück wie z. B. eine Jacke, ein Mantel, eine Hose, ein Overall und dergleichen, da diesen üblicherweise wärmeisolierende Funktion obliegt.

Die Erfindung ist somit vorteilhafterweise insbesondere geeignet für Funktions- bzw. Einsatzkleidung. Im Rahmen der Erfindung bedeutet Wärmeisolation nicht nur den Schutz vor großer Kälte, sondern auch den Schutz vor übermäßiger Hitze. Daher kann die Erfindung nicht nur bei Einsätzen von Polizei, Militär, Technischem Hilfswerk u. a. in kalten Gebieten und/oder im Winter Verwendung finden, sondern auch unter großer Hitze wie z. B. bei der Brandbekämpfung durch die Feuerwehr.

Bei dem eingangs genannten Verfahren zur Herstellung einer erfindungsgemäßen flexiblen Schichtanordnung werden in einem ersten Schritt verschiedene Schichten aus Komponenten zusammengefügt werden. In einem zweiten Schritt werden die verschiedenen Schichten zusammengefügt. Die Komponenten der Schichten umfassen dabei unter anderem Wärmeisolationselemente, elastische Elemente sowie optional Abstandselemente. Das Abstandselement weist im Verhältnis zu einem elastischen Element eine erheblich geringere, vernachlässigbare bzw. nahezu keine Elastizität in Dehnungsrichtung auf. Es stellt innerhalb einer Schicht vornehmlich ein Verbindungselement dar und legt über seine Länge einen fixen Abstand für die Anordnung der Wärmeisolationselemente und elastischen Elemente zueinander fest. Fügen bezeichnet dabei grundsätzlich das dauerhafte Verbinden von mindestens zwei Elementen. Das Zusammenfügen der Komponenten zu Schichten erfolgt besonders bevorzugt durch einfach überlappende Nähte, das Zusammenfügen der Schichten mittels Steppnähten oder Bundnähten. Alternativ oder zusätzlich können die unterschiedlichen Schichten auch durch Kleben oder Schweißen verbunden werden.

Bei dem eingangs genannten Verfahren zur Herstellung eines erfindungsgemäßen Bekleidungsstücks wird eine Anzahl von erfindungsgemäßen flexiblen Schichtanordnungen und optional zusätzliche Kleidungspartien (z.B. Bekleidungsteile und/oder -abschnitte) zusammengefügt, vorzugsweise genäht und/oder geklebt und/oder geschweißt.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen einer anderen Anspruchskategorie weitergebildet sein können und insbesondere auch einzelne Merkmale verschiedener Ausführungsbeispiele zu neuen Ausführungsbeispielen kombiniert werden können.

Bevorzugt ist eine Anzahl von elastischen Elementen in Verlängerung zumindest eines Wärmeisolationselements in Dehnungsrichtung mit diesem verbunden. In der Dehnungsstellung der Schichtanordnung ist die Anzahl der elastischen Elemente gedehnt. Dass die elastischen Elemente "in Verlängerung" zumindest eines Wärmeisolationselements in Dehnungsrichtung mit diesem verbunden sind, bedeutet, dass sie sich in derselben Schicht an das Wärmeisolationselement anschließend, vorzugsweise flächig, in Dehnungsrichtung erstrecken.

Die Dehnung der flexiblen Schichtanordnung wird also mittels einer Dehnung der elastischen Elemente gegenüber ihrer Normalstellung erzielt. Im gedehnten Zustand üben die elastischen Elemente eine Rückstellkraft auf die verschobenen Wärmeisolationselemente aus, die in Richtung der Normalstellung gerichtet ist. Die elastischen Elemente können dabei z. B. einfach als Gummizug oder auch beispielsweise als elastische flächige Gewebeelemente ausgeführt sein. Sie können das Wärmeisolationselement zwar grundsätzlich auch mit Elementen aus anderen Schichten verbinden, bevorzugt stellen sie jedoch das Verbindungselement zum nächsten Element in derselben Schicht dar. Die Verbindung kann dabei punktuell sein, wie z. B. beim Gummizug, bevorzugt handelt es sich jedoch um eine flächige Verbindung derart, dass die Elemente einer Schicht eine zusammenhängende Fläche ergeben.

Die rückstellende, in die Normalstellung gerichtete Wirkung der elastischen Elemente, ist besonders vorteilhaft, da hierdurch ein Knittern bzw. Knautschen der Wärmeisolationselemente vermieden wird. Die Wärmeisolationselemente werden mittels der elastischen Elemente innerhalb ihrer Schicht geordnet in die Normalstellung zurückgeführt.

Wie vorher bereits beschrieben, sollen eben nicht die Wärmeisolationselemente, sondern die elastischen Elemente gedehnt werden. Daher weisen die elastischen Elemente besonders bevorzugt in Dehnungsrichtung eine erheblich höhere Elastizität auf als die Wärmeisolationselemente, welche bevorzugt ein unelastisches Trägerelement umfassen, über das sie mit den benachbarten Elementen ihrer Schicht verbunden sind. Unter Elastizität wird allgemein eine reversible Verformbarkeit verstanden. Dabei bedeutet "erheblich", dass die Wärmeisolationselemente beispielsweise nach einer Vorspannung mit 50 g bei einer Streckung mit 1250g nur eine vernachlässigbare Längenänderung erfahren, wohingegen die elastischen Elemente mit einer Längenänderung von 30% bis 50% gedehnt werden. Das heißt, dass sich die elastischen Elemente wesentlich leichter dehnen, also strecken oder stauchen, lassen als die Wärmeisolationselemente. Anders betrachtet sind die Wärmeisolationselemente wesentlich steifer bzw. starrer in der Dehnungsrichtung als die elastischen Elemente. Dazu umfasst das Wärmeisolationselement neben einem Isolator, d. h. das Luftpolster, bevorzugt auch ein Trägerelement, beispielsweise einen zugfesten Futterstoff. Der in der Regel dehnbare Isolator ist mit dem in Dehnungsrichtung nur schwer zu verformenden Trägerelement beispielsweise mittels einer Steppnaht verbunden. Dadurch wird gewährleistet, dass das Wärmeisolationselement auch bei einer Krafteinwirkung in Dehnungsrichtung keine Verformung erfährt.

Die Wärmeisolationselemente sind bei einer erfindungsgemäßen Schichtanordnung vorzugsweise in zwei Schichten angeordnet. Um die Dicke der Schichtanordnung möglichst gering zu halten und somit möglichst optimale Beweglichkeit zu gewährleisten, ist es erforderlich, die Anzahl der Schichten möglichst klein zu halten. Mit zwei Schichten von Wärmeisolationselementen ist die kleinste Anzahl an Schichten gegeben, mit der die Wärmeisolationselemente zur Überlappung gebracht werden können.

Bevorzugt weist ein Überlappungsbereich einer erfindungsgemäßen Schichtanordnung zwischen den Wärmeisolationselementen in der Dehnungsstellung zumindest eine Länge von 2 cm, besonders bevorzugt zumindest 3 cm, auf. Die ausreichende Länge des Überlappungsbereichs gewährleistet gute Isolationseigenschaften der Schichtanordnung. Die Größe des Überlappungsbereichs ist in der Normalstellung über die Länge in Dehnungsrichtung der jeweiligen Komponenten definiert. Bei einer Dehnung der Schichtanordnung wird die Größe des Überlappungsbereichs variiert. Bei einer Stauchung der Schichtanordnung wird der Überlappungsbereich vergrößert, bei einer Streckung der Schichtanordnung wird der Überlappungsbereich verkleinert. Es bleibt dabei jedoch immer ein gewisses Minium an Überlappung bestehen. Diese minimale Überlappung ist beispielsweise über eine maximale Länge der gedehnten elastischen Elemente vorgegeben. Mögliche Dehnbarkeiten der elastischen Elemente über die maximale, ohne plastische Verformung zu erreichende Länge hinausgehen, sind meist unerheblich, da sie bei korrekter Auslegung der elastischen Elemente bezüglich ihrer Länge und Elastizität aufgrund der anatomischen Grenzen im Bekleidungsstück bei regulärer Verwendung nicht erzielt werden.

Die Wärmeisolationselemente einer erfindungsgemäßen Schichtanordnung umfassen bevorzugt eine Isolationsschicht, besonderes bevorzugt ein Polyesterfaservlies und/oder eine Daunenfüllung. Des Weiteren umfassen sie vorzugsweise zumindest eine Schicht aus der folgenden Gruppe:
- aluminisiertes Polypropylenvlies,
- Trägermaterial, vorzugsweise ein Polyamid-Rippstopp-Gewebe,
- daunendichtes Futter, vorzugsweise Synthesefutter.

Die Isolationsschicht bzw. der Isolator eines Wärmeisolationselements besteht bevorzugt aus einem Polyesterfaservlies, mit einem definierten Flächengewicht. Dabei können unterschiedliche Polyesterfasern, mit unterschiedlicher Länge und Struktur verwendet werden. Die Fasern sind in sich gekräuselt, wirr bzw. chaotisch verschlungen angeordnet. Ein Schmelzkleber hält die Fasern in ihrer wirren Struktur, wodurch ein möglichst hoher Lufteinschluss erzeugt wird.

In einer besonders bevorzugten Variante weisen die Wärmeisolationselemente einen dreilagigen Aufbau auf. Dabei besteht die Isolationsschicht als mittlere zweite Lage aus Polyesterfaservlies und wird zwischen einer ersten Lage aus aluminisiertem Polypropylenvlies und einem Trägerelement aus Polyamid-Rippstopp-Gewebe als dritter Lage gehalten, wobei die drei Lagen durch Steppnähte miteinander verbunden sind.

Bei einer zweiten besonders bevorzugten Variante weisen die Wärmeisolationselemente einen dreilagigen Aufbau mit einer ersten Lage aus daunendichtem Synthesefutter, einer mittleren zweiten Lage aus einer Daunenfüllung und einer dritten Lage aus daunendichtem Synthesefutter auf. Dabei sind die erste Lage und die dritte Lage durch Verbindungsstege, Steppnähte und/oder Schweißnähte in regelmäßigen Abständen verbunden. Durch eine voluminöse, gewölbte Gestaltung derjenigen Seite, welche nicht mit weiteren Elementen der Schicht verbunden ist werden Daunenkammern aufgebaut, die für den Lufteinschluss sorgen.

Wenn die Wärmeisolationselemente in einer Außenschicht eingesetzt werden, weisen sie bevorzugt nach außen hin ein geeignetes Außenmaterial auf, das vor Außeneinwirkung schützt, also beispielsweise das Eindringen von Feuchtigkeit, Wind etc. verhindert. Dabei ist das Außenmaterial vorzugsweise unelastisch. In diesem Fall ist das Wärmeisolationselement auf das Außenmaterial bzw. das Außengewebe in Kantenbereichen aufgenäht.

Außenmaterial bzw. Außengewebe der Wärmeisolationselemente, sowie Abstandselemente in der Außenschicht der Bekleidung sind bevorzugt möglichst stark wasserabweisend und winddicht, um die Wärmeisolationswirkung der Wärmeisolationselemente nicht zu beeinträchtigen.

Die Schichten einer erfindungsgemäßen Schichtanordnung sind bevorzugt jeweils mittels zumindest einer Naht miteinander verbunden. Dabei schließt die Naht die flexible Schichtanordnung in Dehnungsrichtung endseitig ab. Die Naht stellt somit einerseits die definierte schichtweise Anordnung der einzelnen Komponenten sicher, so dass die Komponenten in definierten Bereichen, wie z. B. dem Überlappungsbereich, übereinandergefügt sind. Andererseits grenzt die Naht die flexible Schichtanordnung gegenüber anderen unflexiblen Stoffpartien oder auch gegenüber einer weiteren flexiblen Schichtanordnung ab. Die Naht kann dabei in jeder geeigneten Form ausgeführt sein, beispielsweise als Steppnaht, als Bundnaht oder dergleichen. Auch ein Kleben oder Ultraschallschweißen ist möglich.

Bei einer erfindungsgemäßen Schichtanordnung ist bevorzugt in einem Bereich eines Wärmeisolationselements einer Schicht in einer anderen Schicht ein elastisches Element angeordnet. Durch diese alternierende, d. h. abwechselnde, Anordnung wird sichergestellt, dass in den Bereichen mit den elastischen Elementen, die schlechtere Wärmeisolationseigenschaften aufweisen, in einer benachbarten, z. B. darüber liegenden anderen Schicht immer auch ein Wärmeisolationselement angeordnet ist. Dadurch ergibt sich eine quasi geschlossene Fläche aus den Wärmeisolationselementen, die als flexible Wärmeisolation wirkt. Dabei sind die elastischen Elemente in Dehnungsrichtung kürzer als die Wärmeisolationselemente der benachbarten, z. B. darüber liegenden Schicht. Bei einer parallelen Anordnung der beiden Schichten wird dadurch eine Überlappung der Wärmeisolationselemente erzielt.

Bei einer vorteilhaften Variante der erfindungsgemäßen Schichtanordnung sind zwei Schichten zunächst mittels einer Anfangsnaht verbunden. In einer ersten Schicht folgen in Dehnungsrichtung auf die Anfangsnaht ein elastisches Element und ein Wärmeisolationselement. In einer zweiten Schicht folgen in Dehnungsrichtung auf die Anfangsnaht ein Wärmeisolationselement und dann ein elastisches Element. Die beiden Schichten sind schließlich mit einer Abschlussnaht verbunden. In beiden Schichten sind benachbarte Elemente, die innerhalb einer Schicht liegen, in Dehnungsrichtung miteinander verbunden. Diese Ausführungsform stellt eine vorteilhaft einfache Variante der erfindungsgemäßen Schichtanordnung dar. Dabei ist das elastische Element der ersten Schicht im Bereich des Wärmeisolationselements der zweiten Schicht parallel zu diesem angeordnet. Analog ist das Wärmeisolationselement der ersten Schicht im Bereich des elastischen Elements der zweiten Schicht parallel zu diesem angeordnet. Dabei sind die elastischen Elemente in Dehnungsrichtung wie oben bereits beschrieben kürzer als die Wärmeisolationselemente, wodurch eine Überlappung der Wärmeisolationselemente erzielt.

Bei einer weiteren Variante der erfindungsgemäßen Schichtanordnung sind zwei Schichten mit einer Anfangsnaht verbunden. Auf die Anfangsnaht folgt in Dehnungsrichtung in einer ersten Schicht ein Abstandselement oder ein elastisches Element, ein Wärmeisolationselement und ein elastisches Element oder ein Abstandselement. In einer zweiten Schicht folgt auf die Anfangsnaht in Dehnungsrichtung ein Wärmeisolationselement, ein elastisches Element und ein weiteres Wärmeisolationselement. Abschließend sind die Schichten mit einer Abschlussnaht miteinander verbunden. Dabei sind benachbarte Elemente innerhalb einer Schicht in Dehnungsrichtung jeweils miteinander verbunden.

Bei einer weiteren Variante der erfindungsgemäßen Schichtanordnung verbindet eine Anfangsnaht drei Schichten. In einer ersten Schicht folgt in Dehnungsrichtung auf die Anfangsnaht lediglich ein Wärmeisolationselement. In einer zweiten Schicht, die vorzugsweise als Futterschicht des Bekleidungsstückes wirkt, folgt auf die Anfangsnaht in Dehnungsrichtung ein elastisches Element und ein Wärmeisolationselement. In einer Außenschicht sind in beliebiger Reihenfolge ein elastisches Element und ein Abstandselement angeordnet. Abschließend sind lediglich die Außenschicht und die zweite Schicht mit einer Abschlussnaht verbunden. Dabei sind benachbarte Elemente innerhalb der Außenschicht und innerhalb der zweiten Schicht in Dehnungsrichtung jeweils miteinander verbunden. Bei dieser Variante der Schichtanordnung ist die erste Schicht keine durchgehende Schicht. Sie erstreckt sich also nicht über die gesamte Länge in Dehnungsrichtung. Das Wärmeisolationselement der ersten Schicht ist somit quasi freistehend zwischen der Außenschicht und der zweiten Schicht angeordnet. Auch bei dieser Variante befinden sich die Wärmeisolationselemente lediglich in zwei Schichten. In der ersten Schicht befindet sich jedoch kein elastisches Element. Wenn sich die Schichtanordnung also in der Dehnungsstellung befindet, wird die in die Normalstellung wirkende Kraft durch die elastischen Elemente der Außenschicht und der zweiten Schicht erzeugt. Die Anfangsnaht ist dabei besonders bevorzugt als Bundnaht ausgebildet. Ein Vorteil dieser Variante besteht darin, dass die Außenschicht sowohl visuell, als auch funktionell unabhängig von den Wärmeisolationselementen gestaltet werden kann.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: eine grob schematische Schnittdarstellung eines Ausführungsbeispiels einer erfindungsgemäßen Schichtanordnung in Normalstellung,
- Figur 2: eine grob schematische Schnittdarstellung des Ausführungsbeispiels aus Figur 1, jedoch in Dehnungsstellung,
- Figur 3: eine grob schematische Schnittdarstellung eines weiteren Ausführungsbeispiels einer erfindungsgemäßen Schichtanordnung in Normalstellung,
- Figur 4: eine grob schematische Schnittdarstellung des Ausführungsbeispiels aus Figur 3, jedoch in Dehnungsstellung,
- Figur 5: eine grob schematische Schnittdarstellung eines weiteren Ausführungsbeispiels einer erfindungsgemäßen Schichtanordnung in Normalstellung,
- Figur 6: eine grob schematische Schnittdarstellung des Ausführungsbeispiels aus Figur 5, jedoch in Dehnungsstellung,
- Figur 7: eine Vorderansicht eines Ausführungsbeispiels für ein erfindungsgemäßes Bekleidungsstück,
- Figur 8: eine schematische Rückansicht des Ausführungsbeispiels aus Figur 7,
- Figur 9: eine schematische Schnittansicht durch ein Ausführungsbeispiel eines erfindungsgemäßen Wärmeisolationselements und
- Figur 10: eine schematische Schnittansicht durch ein weiteres Ausführungsbeispiel eines erfindungsgemäßen Wärmeisolationselements.

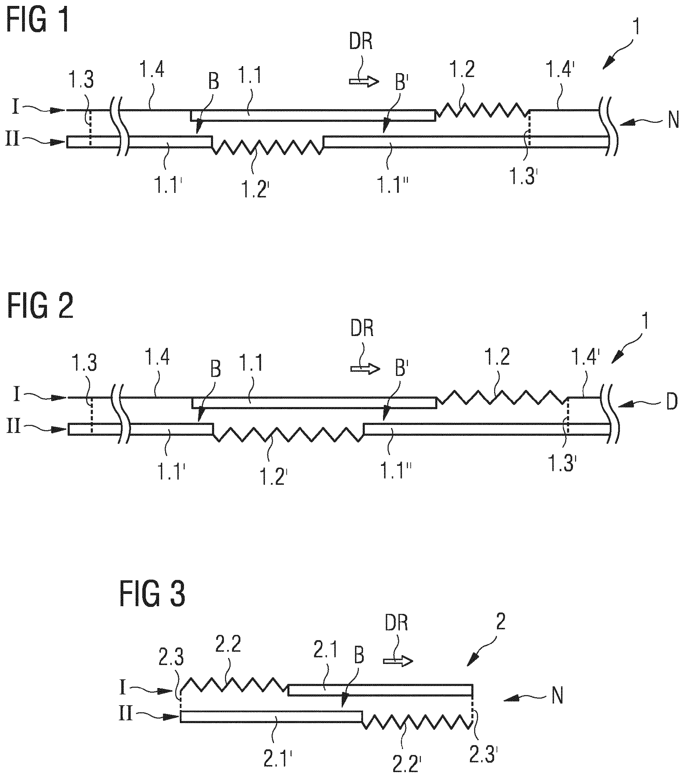

In Figur 1 ist beispielhaft und grob schematisch eine erfindungsgemäße flexible Schichtanordnung 1 in Normalstellung N in einer Schnittansicht dargestellt. Die Schichtanordnung 1 umfasst zwei parallele Schichten I, II. Beide Schichten I, II erstrecken sich in einer Dehnungsrichtung DR sowie in eine Richtung, die in die Darstellungsebene hineinweist. Die Schichten I, II sind also in zwei parallelen Ebenen angeordnet. Die Schichtanordnung 1 beginnt in Dehnungsrichtung DR mit einer Anfangsnaht 1.3 und endet in Dehnungsrichtung DR mit einer Abschlussnaht 1.3'. Die Begriffe Anfangsnaht und Abschlussnaht 1.3' sind hier und analog auch bei den folgenden Ausführungsbeispielen der einfacheren Beschreibung halber als Beginn bzw. Ende der Schichtanordnung 1, 2, 3 in Dehnungsrichtung DR gewählt. Ebenso wie die Dehnungsrichtung DR können sie auch beispielsweise genau entgegengesetzt definiert werden. Die beiden Nähte 1.3, 1.3' sind als Steppnähte ausgeführt. In der ersten Schicht I folgt auf die Anfangsnaht 1.3 ein erstes Abstandselement 1.4, das eine beliebig wählbare Länge in Dehnungsrichtung DR aufweisen kann. Mit dem ersten Abstandselement 1.4 verbunden, schließt daran in Dehnungsrichtung DR ein erstes Wärmeisolationselement 1.1 mit einem Außenmaterial an. Auf das erste Wärmeisolationselement 1.1 folgt in Dehnungsrichtung DR mit diesem verbunden ein erstes elastisches Element 1.2. Das erste elastische Element 1.2 ist endseitig über die Abschlussnaht 1.3' mit der zweiten Schicht II verbunden. Damit ist die erste Schicht I der Schichtanordnung 1 abgeschlossen. Die Schicht I kann jedoch auch außerhalb der erfindungsgemäßen Schichtanordnung, 1 beispielsweise wie hier dargestellt, durch das zweite Abstandselement 1.4' beliebig fortgesetzt werden.

Die Anfangsnaht 1.3 verbindet das erste Abstandselement 1.4 der ersten Schicht I mit einem zweiten Wärmeisolationselement 1.1' der zweiten Schicht II. Das zweite Wärmeisolationselement 1.1' ist somit in Dehnungsrichtung DR im gleichen Bereich wie das erste Abstandselement 1.4 angeordnet. Es erstreckt sich in Dehnungsrichtung DR um einen gewissen Abschnitt länger als das erste Abstandselement 1.4, so dass sich das zweite Wärmeisolationselement 1.1' mit dem ersten Wärmeisolationselement 1.1 in diesem Abschnitt überlappt. Der Abschnitt wird daher folgend auch Überlappungsbereich B genannt. An das zweite Wärmeisolationselement 1.1' schließt in Dehnungsrichtung DR mit diesem verbunden ein zweites elastisches Element 1.2' an. Das zweite elastische Element 1.2' ist wesentlich kürzer ausgeführt als das parallele in Dehnungsrichtung DR im gleichen Bereich angeordnete und darüber liegende erste Wärmeisolationselement 1.1. Mit dem zweiten elastischen Element 1.2' wiederum ist in Dehnungsrichtung DR ein drittes Wärmeisolationselement 1.1" verbunden, so dass sich zwischen dem ersten Wärmeisolationselement 1.1 und dem dritten Wärmeisolationselement 1.1" ein relativ großer zweiter Überlappungsbereich B' ergibt. Die Abschlussnaht 1.3' verbindet das dritte Wärmeisolationselement 1.1" mit dem ersten elastischen Element 1.2. Die Abschlussnaht 1.3' schließt zugleich die zweite Schicht II und somit auch die Schichtanordnung 1 insgesamt in Dehnungsrichtung DR ab. Ebenfalls analog zur ersten Schicht I kann auch die zweite Schicht II außerhalb der eigentlichen Schichtanordnung 1 in Dehnungsrichtung durch das dritte Wärmeisolationselement 1.1" beliebig fortgesetzt werden. Auch jenseits der Anfangsnaht 1.3 kann außerhalb der Schichtanordnung 1 entgegen der Dehnungsrichtung DR die erste Schicht I beispielsweise durch das erste Abstandselement 1.4 sowie die zweite Schicht II beispielsweise durch das zweite Wärmeisolationselement 1.1' beliebig fortgesetzt werden.

Die Schichtanordnung 1 befindet sich in Normalstellung N. Diese ist dadurch gekennzeichnet, dass das erste elastische Element 1.2 und das zweite elastische Element 1.2' entspannt sind. Außerdem ist der zweite Überlappungsbereich B' verhältnismäßig groß, wie anhand von Figur 2 noch näher erläutert wird.

Figur 2 zeigt die Schichtanordnung 1 aus Figur 1 ebenfalls beispielhaft und grob schematisch in einer Schnittansicht. Die Schichtanordnung 1 befindet sich hier jedoch in einer Dehnungsstellung D. Von der Anfangsnaht 1.3 bis zum ersten Überlappungsbereich B ist die Schichtanordnung 1 gegenüber Figur 1 unverändert. Die elastischen Elemente 1.2, 1.2' sind gestreckt und stehen somit zugleich unter Spannung. Das dritte Wärmeisolationselement 1.1" ist relativ zum ersten Wärmeisolationselement 1.1 in Dehnungsrichtung DR verschoben. Dementsprechend ist der zweite Überlappungsbereich B' gegenüber der Normalstellung N verkleinert. Die Schichtanordnung 1 ist infolgedessen insgesamt gestreckt und weist daher in Dehnungsrichtung DR eine größere Länge auf als in der Normalstellung N.

Um die Schichtanordnung 1 von der Normalstellung N in die Dehnungsstellung D zu bringen bzw. sie dort zu halten, muss eine externe Kraft in Dehnungsrichtung DR auf die Schichtanordnung 1 ausgeübt werden. Durch diese Kraft werden die elastischen Elemente 1.2, 1.2' gestreckt, wohingegen die Wärmeisolationselemente 1.1, 1.1', 1.1" keine Verformung erfahren. In der Dehnungsstellung D liegen die elastischen Elemente 1.2, 1.2' in einem gespannten Zustand vor. Daher üben sie eine Rückstellkraft aus, die in Richtung der Normalstellung N wirkt. Lässt nun die externe Kraft nach, führen die elastischen Elemente 1.2, 1.2' die Schichtanordnung 1 wieder zurück in die Normalstellung N.

Auch wenn der zweite Überlappungsbereich B' in der Dehnungsstellung D gegenüber der Normalstellung N verkleinert ist, bleibt zumindest ein minimaler Überlappungsbereich bestehen, der über eine maximal gedehnte Länge der elastischen Elemente 1.2, 1.2' definiert ist.

In der Normalstellung N beträgt die Länge des ersten elastischen Elements 1.2 30 cm, die Länge des zweiten elastischen Elements 1.2' 25 cm, die Länge des ersten Wärmeisolationselements 1.1 43 cm und die Länge des dritten Wärmeisolationselements 1.1" 46 cm. Dadurch ergibt sich für den zweiten Überlappungsbereich B' in der Normalstellung N eine Länge von 16 cm und der erste Überlappungsbereich B weist eine Länge von 2 cm auf. Das erste elastische Element 1.2 weist eine Elastizität von 30% und das zweite elastische Element 1.2' weist eine Elastizität von 40% auf. Dabei bedeuten die Prozentangeben die Längenänderung zwischen einem ungedehnten Normalzustand und einem maximal gedehnten Zustand.

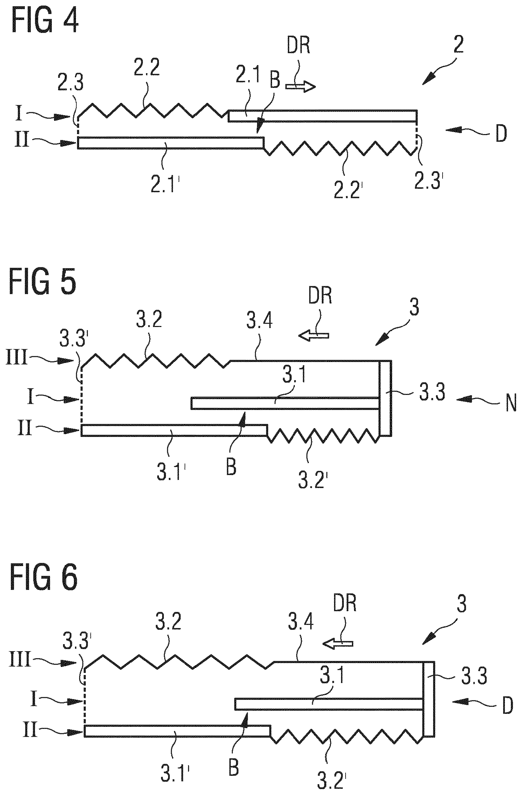

In Figur 3 ist eine ähnliche erfindungsgemäße Schichtanordnung 2 wie in Figur 1 bzw. Figur 2 beispielhaft und grob schematisch als Schnittansicht in der Normalstellung N gezeigt. Dieselbe Schichtanordnung 2 ist in Figur 4 in der Dehnungsstellung D dargestellt. Wie in den Figuren 1 und 2 weist die Schichtanordnung 2 zwei parallele Schichten I, II auf, die über eine Anfangsnaht 2.3 und eine Abschlussnaht 2.3' jeweils endseitig miteinander verbunden sind. In der ersten Schicht I folgen in Dehnungsrichtung DR auf die Anfangsnaht 2.3 ein erstes elastisches Element 2.2, ein erstes Wärmeisolationselement 2.1 mit einem Außenmaterial und schließlich die Abschlussnaht 2.3'.In der zweiten Schicht II folgen in Dehnungsrichtung DR auf die Anfangsnaht 2.3 ein zweites elastisches Element 2.2', ein zweites Wärmeisolationselement 2.1' und schließlich die Abschlussnaht 2.3'. Dabei sind die elastischen Elemente 2.2, 2.2' in Dehnungsrichtung jeweils kürzer als die Wärmeisolationselemente 2.1, 2.1', sodass zwischen den Wärmeisolationselementen 2.1, 2.1' ein Überlappungsbereich B entsteht. Um die flexible Schichtanordnung 2 zu strecken und sie in die Dehnungsstellung D zu bringen, wird das erste Wärmeisolationselement 2.1 gegenüber dem zweiten Wärmeisolationselement 2.1' in Dehnungsrichtung DR verschoben. Dabei werden die elastischen Elemente 2.2, 2.2' gedehnt und der Überlappungsbereich B wird im Vergleich zur Normalstellung N verkleinert (siehe Figur 4).

Wenn aufgrund ergonomischer Anforderungen die Schichtanordnung in einem Dehnungsbereich eine maximale Dehnung von Dₘₐₓ bieten soll, dann sollten vorzugsweise sowohl durch die Konstruktion, als auch die Elastizität und der Länge der elastischen Elemente folgende Werte eingehalten werden:
Die beiden elastischen Elemente sollten vorzugsweise zumindest die erwünschte maximale Dehnung Dₘₐₓ ermöglichen. Für die erreichbare Dehnung D1 des ersten elastischen Elements und die erreichbare Dehnung D2 des zweiten elastischen Elements sollte vorzugsweise also: Dₘₐₓ ≤ D1 und Dₘₐₓ ≤ D2 gelten. Mit der ungedehnten Länge L1 bzw. L2 des ersten elastischen Elements bzw. des zweiten elastischen Elements und deren Elastizität E1 bzw. E2 folgt: Dₘₐₓ ≤ L1*E1 und Dₘₐₓ ≤ L2*E2. Dabei ergeben sich E1 bzw. E2 als Faktoren zur Multiplikation mit der Länge des ungedehnten elastischen Elements zur Berechnung der maximalen Dehnung. Die Berechnung erfolgt durch eine Umrechnung der üblicherweise in Prozent angegebenen Elastizität, also beispielsweise ein Faktor von 0,3 bzw. 0,4 für einen Elastizitätswert von 30% bzw. 40%.

Um eine bevorzugte Überlappung von minimal 3 cm im gedehnten Zustand zu gewährleisten, ergibt sich für die Überlappungsbereiche B bzw. B' im ungedehnten Zustand dann jeweils eine Länge von: B = B' ≥ Dₘₐₓ + 3 cm.

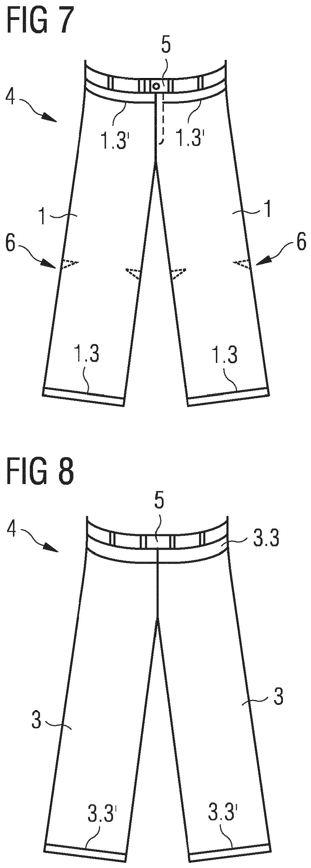

In Figur 5 ist eine weitere Variante einer erfindungsgemäßen Schichtanordnung 3 beispielhaft und grob schematisch als Schnittansicht in der Normalstellung N gezeigt. Dieselbe Schichtanordnung 3 ist in Figur 6 in der Dehnungsstellung D dargestellt. Die Schichtanordnung 3 umfasst eine erste Schicht I, eine zweite Schicht II und eine Außenschicht III. In einem anhand der Figuren 7 bis 9 später noch beschriebenen erfindungsgemäßen Bekleidungsstück 4 bildet die Außenschicht III der Schichtanordnung 3 zugleich auch eine Außenschicht des Bekleidungsstücks 4.

Die Schichten I, II, III sind parallel zu einander, erstrecken sich in Dehnungsrichtung DR und in einer Richtung, die in die Darstellungsebene hineinweist. Dabei ist die erste Schicht I zwischen der Außenschicht III und der zweiten Schicht II angeordnet. Eine Anfangsnaht 3.3, die als Bundnaht 3.3 ausgeführt ist, verbindet die drei Schichten I, II, III miteinander. Daran schließt sich in der Außenschicht III ein Abstandselement 3.4 gefolgt von einem elastischen Element 3.2 an. In der ersten Schicht I ist anschließend an die Bundnaht 3.3 lediglich ein freistehendes erstes Wärmeisolationselement 3.1 angeordnet. in der zweiten Schicht II, die als Futterschicht wirkt, folgt in Dehnungsrichtung DR auf die Bundnaht 3.3 ein zweites elastisches Element 3.2' und ein zweites Wärmeisolationselement 3.1'. Eine Abschlussnaht 3.3' verbindet lediglich die Außenschicht III und die zweite Schicht (Futterschicht) II. Die erste Schicht I ist nicht mit der Abschlussnaht 3.3' verbunden, sodass zwischen dem ersten Wärmeisolationselement 3.1 und die Abschlussnaht 3.3' also ein Freiraum verbleibt. Das zweite elastische Element 3.2' ist in Dehnungsrichtung DR kürzer als das erste Wärmeisolationselement 3.1, sodass zwischen dem ersten Wärmeisolationselement 3.1 und dem zweiten Wärmeisolationselement 3.1' ein Überlappungsbereich B entsteht.

Die Schichtanordnung 3 wird in Dehnungsstellung D gebracht (siehe Figur 6), indem das zweite Wärmeisolationselement 3.1' gegenüber dem ersten Wärmeisolationselement 3.1 in Dehnungsrichtung DR verschoben wird z. B. beim Beugen eines Gelenks. Dabei wird der Überlappungsbereich B zwischen den Wärmeisolationselementen 3.1, 3.1' verkleinert. Zugleich werden die elastischen Elemente 3.2, 3.2' gespannt, sodass sie eine Kraft ausüben, die in Richtung der Normalstellung N wirkt.

In der Normalstellung N beträgt die Länge des ersten elastischen Elements 3.2 40 cm, die Länge des zweiten elastischen Elements 3.2' 28 cm und die Länge des ersten Wärmeisolationselements 3.1 46 cm. Dadurch ergibt sich für den Überlappungsbereich B in der Normalstellung N eine Länge von 18 cm. Das erste elastische Element 3.2 weist eine Elastizität von 30% und das zweite elastische Element 3.2' weist eine Elastizität von 40% auf. Dabei bedeuten wie oben bereits beschrieben die Prozentangeben die Längenänderung zwischen einem ungedehnten Normalzustand und einem maximal gedehnten Zustand.

Figur 7 zeigt eine Vorderansicht und Figur 8 eine Rückansicht eines erfindungsgemäßen Bekleidungsstücks 4 in Form einer üblichen Hose 4. Die Hose 4 weist einen Hüftbereich 5 sowie zwei damit verbundene Beine auf und bedeckt damit im Betrieb den Körper eines Benutzers von der Taille an abwärts. Vorderseitig (siehe Figur 7) sind bei beiden Beinen jeweils in einem Kniebereich 6 die elastischen Elemente 1.2, 1.2' einer Schichtanordnung 1 der anhand der Figuren 1 und 2 beschrieben Ausführungsform angeordnet. Die Schichtanordnungen 1sind mittels der Anfangsnaht 1.3 und der Abschlussnaht 1.3' mit weiteren Stoffpartien der Hose 4 verbunden. Dabei ist die Abschlussnaht 1.3' im Bereich des Hosenbunds, also in einem Hüftbereich 5 der Hose 4 bzw. ein Stück weit darunter und die Anfangsnähte 1.3 sind jeweils im Bereich eines Hosenbeinsaums bzw. ein Stück weit darüber angeordnet. Rückseitig (siehe Figur 8) in einem Gesäßbereich der Hose 4 mit elastischen Elementen 3.2, 3.2', die sich bis in den Bereich der Kniekehlen erstecken, sind zwei Schichtanordnungen 3 der anhand der Figuren 5 und 6 beschrieben Ausführungsform angeordnet. Mit dem Hüftbereich 5 der Hose 4 sind sie mittels einer Bundnaht 3.3 verbunden. Zur Unterseite der Hose 4 dient jeweils eine Abschlussnaht 3.3' im Hosenbeinsaum bzw. ein Stück weit darüber angeordnet als Verbindungselement.

In den übrigen Bereichen weist die erfindungsgemäße Hose 4 eine relativ starre Wärmeisolation im Verhältnis zu den erfindungsgemäßen flexiblen Schichtanordnungen 1, 3 auf. Da diese Bereiche jedoch nicht in dem Maße wie die mit den Schichtanordnungen ausgestatteten Dehnungsbereiche bewegt werden, entstehen hierdurch vorteilhafterweise weder Einbußen hinsichtlich der Bewegungsfreiheit noch einer Verschlechterung der Wärmeisolation.

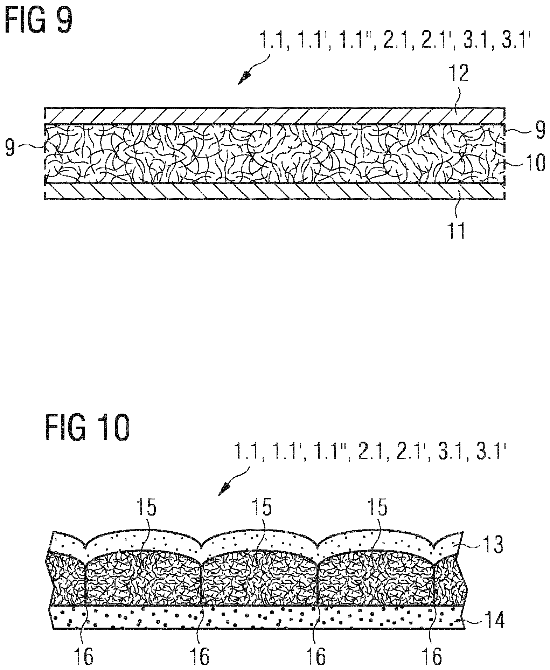

Figur 9 zeigt eine schematische Schnittansicht eines erfindungsgemäßen Ausführungsbeispiels eines Wärmeisolationselements 1.1, 1.1', 1.1", 2.1, 2.1', 3.1, 3.1' mit drei parallelen Lagen 10, 11, 12. Die mittlere Lage 10 ist eine Isolationsschicht 10 aus Polyesterfaservlies 10 und wird zwischen einer ersten Lage 12 aus aluminisiertem Polypropylenvlies 12 und einem Trägerelement 11 aus Polyamid-Rippstopp-Gewebe 11 als dritter Lage 11 gehalten. Die drei Lagen 10, 11, 12 sind endseitig durch Steppnähte 9 miteinander verbunden.

In Figur 10 ist eine schematische Schnittansicht durch ein weiteres Ausführungsbeispiel eines erfindungsgemäßen Wärmeisolationselements1.1, 1.1', 1.1", 2.1, 2.1', 3.1, 3.1' dargestellt. Zwischen zwei im Wesentlichen parallelen Lagen 13, 14 aus daunendichtem Synthesefutter ist eine dritte Lage aus mit Daunenmaterial gefüllte Kammern 15 ausgebildet.

Die Lagen 13, 14 aus Synthesefutter sind über parallele Stege 16 in regelmäßigen Abständen miteinander verbunden, wobei eine erste Lage 13 zwischen den verbindenden Stegen 16 leichte Wölbungen aufgrund der Daunenfüllung der Kammern 15 aufweist.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So sind beispielsweise auch andere Kleidungsstücke wie Handschuhe etc. im Rahmen der Erfindung umfasst. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Element" und "Anordnung" nicht aus, dass die betreffende Komponente aus mehreren zusammenwirkenden Teilkomponenten besteht, die gegebenenfalls auch räumlich verteilt sein können.

### Bezugszeichenliste

1, 2, 3 flexible Schichtanordnung
1.1, 1.1', 1.1" 2.1, 2.1', 3.1, 3.1' Wärmeisolationselement
1.2, 1.2', 2.2, 2.2', 3.2, 3.2' elastisches Element
1.3, 2.3, 3.3 Anfangsnaht
1.3', 2.3', 3.3' Abschlussnaht
1.4, 1.4', 3.4 Abstandselement
4 Bekleidungsstück, Hose
5 Hüftbereich
6 Kniebereich
9 Steppnaht
10 Isolationsschicht, Polyesterfaservlies
11Trägerelement, Polyamid-Rippstopp-Gewebe
12 Funktionsschicht, aluminisiertes Polypropylenvlies
13, 14 daunendichtes Synthesefutter
15 Kammern mit Daunenmaterial
16 Stege
I erste Schicht
II zweite Schicht
III Außenschicht
B, B' Überlappungsbereich
DR Dehnungsrichtung
D Dehnungsstellung
N Normalstellung

## Patentansprüche

1. Flexible Schichtanordnung (1, 2, 3), umfassend mehrere Wärmeisolationselemente (1.1, 1.1', 1.1", 2.1, 2.1', 3.1, 3.1'), und
- zumindest zwei verschiedenen Schichten (I, II)
, **dadurch gekennzeichnet, dass** die zumindest zwei verschiedenen Schichten (I, II) der Schichtanordnung (1, 2, 3) zugeordnete Wärmeisolationselemente (1.1, 1.1', 1.1", 2.1, 2.1', 3.1, 3.1') zwischen einer Normalstellung (N) der Schichtanordnung (1, 2, 3) und einer Dehnungsstellung (D) der Schichtanordnung (1, 2, 3) in einer Dehnungsrichtung (DR) gegeneinander verschoben werden und dabei
- die Wärmeisolationselemente (1.1, 1.1', 1.1", 2.1, 2.1', 3.1, 3.1') sich sowohl in der Normalstellung (N) der Schichtanordnung (1, 2, 3) als auch in der Dehnungsstellung (D) der Schichtanordnung (1, 2, 3) überlappen.

2. Schichtanordnung nach Anspruch 1, wobei eine Anzahl von elastischen Elementen (1.2, 1.2', 2.2, 2.2', 3.2, 3.2') in Verlängerung zumindest eines Wärmeisolationselements (1.1, 1.1', 1.1", 2.1, 2.1', 3.1, 3.1') in Dehnungsrichtung (DR) mit diesem verbunden ist und in der Dehnungsstellung (D) gedehnt ist.

3. Schichtanordnung nach Anspruch 2, wobei die elastischen Elemente (1.2, 1.2', 2.2, 2.2', 3.2, 3.2') in Dehnungsrichtung (DR) eine erheblich höhere Elastizität aufweisen als die Wärmeisolationselemente (1.1, 1.1', 1.1", 2.1, 2.1', 3.1, 3.1').

4. Schichtanordnung nach einem der vorstehenden Ansprüche, wobei die Wärmeisolationselemente (1.1, 1.1', 1.1", 2.1, 2.1', 3.1, 3.1') in zwei Schichten (I, II) angeordnet sind.

5. Schichtanordnung nach einem der vorstehenden Ansprüche, wobei die Wärmeisolationselemente (1.1, 1.1', 1.1", 2.1, 2.1', 3.1, 3.1') ein Isolationsschicht, vorzugsweise ein Polyesterfaservlies und/oder eine Daunenfüllung umfassen und vorzugsweise zumindest eine Schicht aus der folgenden Gruppe umfassen:
- aluminisiertes Polypropylenvlies,
- Trägermaterial, vorzugsweise ein Polyamid-Rippstopp-Gewebe,
- daunendichtes Futter, vorzugsweise Synthesefutter.

6. Schichtanordnung nach einem der vorstehenden Ansprüche, wobei in einem Bereich eines Wärmeisolationselements (1.1, 1.1', 1.1", 2.1, 2.1', 3.1, 3.1') einer Schicht (I, II, III) in einer anderen Schicht (I, II, III) ein elastisches Element (1.2, 1.2', 2.2, 2.2', 3.2, 3.2') angeordnet ist.

7. Schichtanordnung nach einem der vorstehenden Ansprüche, wobei die Schichten (I, II, III) jeweils mittels zumindest einer Naht (1.3, 1.3', 2.3, 2.3', 3.3, 3.3') miteinander verbunden sind, welche die flexible Schichtanordnung in Dehnungsrichtung (DR) endseitig abschließt.

8. Schichtanordnung nach einem der vorstehenden Ansprüche, wobei ein Überlappungsbereich (B, B') der Schichtanordnung zwischen den Wärmeisolationselementen (1.1, 1.1', 1.1", 2.1, 2.1', 3.1, 3.1') unterschiedlicher Schichten (I, II) in der Dehnungsstellung (D) zumindest eine Länge von 2 cm, bevorzugt zumindest 3 cm, aufweist.

9. Schichtanordnung (1) nach einem der vorstehenden Ansprüche, wobei nach einer die Schichten (I, II) verbindenden Anfangsnaht (1.3) in Dehnungsrichtung (DR)
- in einer ersten Schicht (I) ein Abstandselement (1.4) oder ein elastisches Element, ein Wärmeisolationselement (1.1) und ein elastisches Element (1.2) oder ein Abstandselement,
- in einer zweiten Schicht (II) ein Wärmeisolationselement (1.1'), ein elastisches Element (1.2') und ein Wärmeisolationselement (1.1") und
- eine die Schichten verbindende Abschlussnaht (1.3') aufeinander folgen, wobei
- benachbarte Elemente innerhalb einer Schicht in Dehnungsrichtung (DR) jeweils miteinander verbunden sind.

10. Schichtanordnung (2) nach einem der Ansprüche 1 bis 8, wobei nach einer die Schichten (I, II) verbindenden Anfangsnaht (2.3) in Dehnungsrichtung (DR)
- in einer ersten Schicht (I) ein elastisches Element (2.2) und ein Wärmeisolationselement (2.1),
- in einer zweiten Schicht (II) ein Wärmeisolationselement (2.1') und ein elastisches Element (2.2') und
- eine die Schichten verbindende Abschlussnaht (2.3') aufeinander folgen, wobei
- benachbarte Elemente innerhalb einer Schicht in Dehnungsrichtung (DR) jeweils miteinander verbunden sind.

11. Schichtanordnung (3) nach einem der Ansprüche 1 bis 8, wobei nach einer die Schichten (I, II, III) verbindenden Anfangsnaht (3.3) in Dehnungsrichtung (DR)
- in einer ersten Schicht (I) ein Wärmeisolationselement (3.1) und
- in einer zweiten Schicht (II) ein Wärmeisolationselement (3.1') und ein elastisches Element (3.2') aufeinander folgen und wobei
- in einer Außenschicht (III) ein elastisches Element (3.2) und ein Abstandselement (3.4) in beliebiger Reihenfolge angeordnet sind und wobei
- eine Schichten verbindende Abschlussnaht (3.3') lediglich die Außenschicht (III) und die zweite Schicht (II) verbindet und
- benachbarte Elemente innerhalb der Außenschicht (III) und der zweiten Schicht (II) in Dehnungsrichtung (DR) jeweils miteinander verbunden sind.

12. Bekleidungsstück (4), umfassend eine Anzahl von Schichtanordnungen (1, 2, 3) nach einem der vorstehenden Ansprüche.

13. Verfahren zur Herstellung einer flexiblen Schichtanordnung (1, 2, 3) nach einem der Ansprüche 1 bis 11, wobei
- in einem ersten Schritt verschiedene Schichten (I, II, III) aus Komponenten (1.1, 1.1', 1.1", 2.1, 2.1', 3.1, 3.1',1.2, 1.2', 2.2, 2.2', 3.2, 3.2',1.4) und
- in einem zweiten Schritt die verschiedenen Schichten (I, II, III) zusammengefügt, vorzugsweise genäht und/oder geklebt und/oder geschweißt, werden.

14. Verfahren zur Herstellung eines Bekleidungsstücks (4) nach Anspruch 12, wobei eine Anzahl von flexiblen Schichtanordnungen (1, 2, 3) nach einem der Ansprüche 1 bis 11 und optional zusätzliche Kleidungspartien zusammengefügt, vorzugsweise genäht und/oder geklebt und/oder geschweißt, werden.

15. Verwendung einer Anzahl von flexiblen Schichtanordnungen (1, 2, 3) nach einem der Ansprüche 1 bis 11 zur Wärmeisolation in Bekleidungsstücken (4), wobei die flexiblen Schichtanordnungen (1, 2, 3) vorzugsweise in Dehnungsbereichen des Bekleidungsstücks (4) angeordnet sind.

## Claims

1. A flexible layer arrangement (1, 2, 3) comprising several thermal insulation elements (1.1, 1.1', 1.1", 2.1, 2.1', 3.1, 3.1'), and
- at least two different layers (I, II),
**characterized in that** the thermal insulation elements (1.1, 1.1', 1.1", 2.1, 2.1', 3.1, 3.1') associated with at least two different layers (I, II) of the layer arrangement (1, 2, 3) are displaced relative to one another in an direction of extension (DR) between a normal position (N) of the layer arrangement (1, 2, 3) and an extended position (D) of the layer arrangement (1, 2, 3), wherein
- the thermal insulation elements (1.1, 1.1', 1.1", 2.1, 2.1', 3.1, 3.1') overlap both in the normal position (N) of the layer arrangement (1, 2, 3) and in the extended position (D) of the layer arrangement (1, 2, 3).

2. The layer arrangement according to claim 1, wherein a number of elastic elements (1.2, 1.2', 2.2, 2.2', 3.2, 3.2') in extension of at least one thermal insulation element (1.1, 1.1', 1.1", 2.1, 2.1', 3.1, 3.1') are connected thereto in the direction of extension (DR) and are stretched in the extended position (D).

3. The layer arrangement according to claim 2, wherein the elastic elements (1.2, 1.2', 2.2, 2.2', 3.2, 3.2') have a considerably higher elasticity in the direction of extension (DR) than the thermal insulation elements (1.1, 1.1', 1.1", 2.1, 2.1', 3.1, 3.1').

4. The layer arrangement according to one of the preceding claims, wherein the thermal insulation elements (1.1, 1.1', 1.1", 2.1, 2.1', 3.1, 3.1') are arranged in two layers (I, II).

5. The layer arrangement according to one of the preceding claims, wherein the thermal insulation elements (1.1, 1.1', 1.1", 2.1, 2.1', 3.1, 3.1') comprise an insulation layer, preferably a polyester fiber fleece and/or a down filling and preferably comprise at least one layer from the following group:
- aluminized polypropylene fleece,
- support material, preferably a polyamide rib-stop fabric,
- down proof lining, preferably synthetic lining.

6. The layer arrangement according to one of the preceding claims, wherein an elastic element (1.2, 1.2', 2.2, 2.2', 3.2', 3.2') is arranged in a region of a thermal insulation element (1.1, 1.1', 1.1", 2.1, 2.1', 3.1, 3.1') of one layer (I, II, III) in another layer (I, II, III).

7. The layer arrangement according to one of the preceding claims, wherein each of the layers (I, II, III) are connected to one another by means of at least one seam (1.3, 1.3', 2.3, 2.3', 3.3, 3.3') which closes off the end of the flexible layer arrangement in the direction of extension (DR).

8. The layer arrangement according to one of the preceding claims, wherein an overlap region (B, B') of the layer arrangement between the thermal insulation elements (1.1, 1.1', 1.1", 2.1, 2.1', 3.1, 3.1') of different layers (I, II) has a length of at least 2 cm, preferably at least 3 cm, in the extended position (D).

9. The layer arrangement (1) according to one of the preceding claims, wherein after an initial seam (1.3) connecting the layers (I, II) in the direction of extension (DR)
- in a first layer (I), a spacer element (1.4) or an elastic element, a thermal insulation element (1.1) and an elastic element (1.2) or a spacer element,
- in a second layer (II), a thermal insulation element (1.1'), an elastic element (1.2') and a thermal insulation element (1.1") and
- a end seam (1.3') connecting the layers follow one another, wherein
- adjacent elements within a layer are connected to each other in the direction of elongation (DR).

10. The layer arrangement (2) according to one of claims 1 to 8, wherein after an initial seam (2.3) connecting the layers (I, II) in the direction of extension (DR)
- in a first layer (I), an elastic element (2.2) and a thermal insulation element (2.1),
- in a second layer (II), a thermal insulation element (2.1') and an elastic element (2.2'), and
- a end seam (2.3') connecting the layers follow one another, wherein
- adjacent elements within a layer are connected to each other in the direction of elongation (DR).

11. The layer arrangement (3) according to one of claims 1 to 8, wherein after an initial seam (3.3) connecting the layers (I, II, III) in the direction of extension (DR)
- in a first layer (I), a thermal insulation element (3.1) and
- in a second layer (II), a thermal insulation element (3.1') and an elastic element (3.2') follow one another, and wherein
- in an outer layer (III), an elastic element (3.2) and a spacer element (3.4) are arranged in any order and wherein
- a layer-connecting end seam (3.3') connects only the outer layer (III) and the second layer (II), and
- adjacent elements within the outer layer (III) and the second layer (II) are respectively connected to each other in the direction of extension (DR).

12. A garment (4) comprising a number of layer arrangements (1, 2, 3) according to any one of the preceding claims.

13. A method of manufacturing a flexible layer arrangement (1, 2, 3) according to any one of claims 1 to 11, wherein
- in a first step, different layers (I, II, III) of components (1.1, 1.1', 1.1", 2.1, 2.1', 3.1, 3.1',1.2, 1.2', 2.2, 2.2', 3.2, 3.2',1.4) and
- in a second step, the various layers (I, II, III) are joined together, preferably sewn and/or glued and/or welded.

14. A method of manufacturing a garment (4) according to claim 12, wherein a number of flexible layer arrangements (1, 2, 3) according to any one of claims 1 to 11 and optionally additional garment portions are joined together, preferably sewn and/or glued and/or welded.

15. Use of a number of flexible layer arrangements (1, 2, 3) according to any one of claims 1 to 11 for thermal insulation in garments (4), the flexible layer arrangements (1, 2, 3) preferably being arranged in extension regions of the garment (4).

## Revendications

1. Dispositif à couches souple (1, 2, 3), comprenant plusieurs éléments d'isolation thermique (1.1, 1.1', 1.1", 2.1, 2.1', 3.1, 3.1'), et
- au moins deux couches différentes (I, II),
**caractérisé en ce que** les éléments d'isolation thermique (1.1, 1.1', 1.1", 2.1, 2.1', 3.1, 3.1') associés aux au moins deux couches différentes (I, II) du dispositif à couches (1, 2, 3) sont déplacés les uns par rapport aux autres entre une position normale (N) du dispositif à couches (1, 2, 3) et une position d'extension (D) du dispositif à couches (1, 2, 3) dans un sens d'extension (DR) et que
- les éléments d'isolation thermique (1.1, 1.1', 1.1", 2.1, 2.1', 3.1, 3.1') se chevauchent aussi bien dans la position normale (N) du dispositif à couches (1, 2, 3) que dans la position d'extension (D) du dispositif à couches (1, 2, 3).

2. Dispositif à couches souple selon la revendication 1, dans lequel un certain nombre d'éléments élastiques (1.2, 1.2', 2.2, 2.2', 3.2, 3.2') dans le prolongement d'au moins un élément d'isolation thermique (1.1, 1.1', 1.1", 2.1, 2.1', 3.1, 3.1') sont, dans le sens d'extension (DR), connectés à celui-ci et étendus dans le position d'extension (D).

3. Dispositif à couches souple selon la revendication 2, dans lequel les éléments élastiques (1.2, 1.2', 2.2, 2.2', 3.2, 3.2') présentent, dans le sens d'extension (DR), une élasticité nettement plus élevée que les éléments d'isolation thermique (1.1, 1.1', 1.1", 2.1, 2.1', 3.1, 3.1').

4. Dispositif à couches souple selon une des revendications précédentes, dans lequel les éléments d'isolation thermique (1.1, 1.1', 1.1", 2.1, 2.1', 3.1, 3.1') sont disposés en deux couches (I, II).

5. Dispositif à couches souple selon une des revendications précédentes, dans lequel les éléments d'isolation thermique (1.1, 1.1', 1.1", 2.1, 2.1', 3.1, 3.1') comprennent une couche isolante, de préférence un non-tissé de fibres de polyester et/ou un rembourrage en plumes et comprennent de préférence au moins une couche du groupe suivant :
- non-tissé de polypropylène aluminisé,
- matériau support, de préférence un textile de polyamide anti-déchirure,
- une doublure étanche aux plumes, de préférence une doublure synthétique.

6. Dispositif à couches souple selon une des revendications précédentes, dans lequel, dans une zone d'un élément d'isolation thermique (1.1, 1.1', 1.1", 2.1, 2.1', 3.1, 3.1') d'une couche (I, II, III), dans une autre couche (I, II, III) un élément élastique (1.2, 1.2', 2.2, 2.2', 3.2, 3.2') est disposé.

7. Dispositif à couches souple selon une des revendications précédentes, dans lequel les couches (I, II, III) sont respectivement connectées entre elles au moyen d'au moins une couture (1.3, 1.3', 2.3, 2.3', 3.3, 3.3') qui termine le dispositif à couches souple dans le sens d'extension (DR) à l'extrémité.

8. Dispositif à couches souple selon une des revendications précédentes, dans lequel une zone de chevauchement (B, B') du dispositif à couches entre les éléments d'isolation thermique (1.1, 1.1', 1.1", 2.1, 2.1', 3.1, 3.1') de différentes couches (I, II) présente, dans la position d'extension (D), au moins une longueur de 2 cm, de préférence au moins 3 cm.

9. Dispositif à couches (1) selon une des revendications précédentes, dans lequel, en aval d'une couture initiale (1.3) connectant les couches (I, II) dans le sens d'extension (DR),
- dans une première couche (I), un élément d'espacement (1.4) ou un élément élastique, un élément d'isolation thermique (1.1) et un élément élastique (1.2) ou un élément d'espacement,
- dans une seconde couche (II), un élément d'isolation thermique (1.1'), un élément élastique (1.2') et un élément d'isolation thermique (1.1") et
- une couture terminale (1.3') connectant les couches se succèdent,
- les éléments voisins à l'intérieur d'une couche étant respectivement connectés entre eux dans le sens d'extension (DR).

10. Dispositif à couches (2) selon une des revendications 1 à 8, dans lequel, en aval d'une couture initiale (2.3) connectant les couches (I, II) dans le sens d'extension (DR),
- dans une première couche (I), un élément élastique (2.2) et un élément d'isolation thermique (2.1),
- dans une seconde couche (II), un élément d'isolation thermique (2.1') et un élément élastique (2.2') et
- une couture terminale (2.3') connectant les couches se succèdent,
- les éléments voisins à l'intérieur d'une couche étant respectivement connectés entre eux dans le sens d'extension (DR).

11. Dispositif à couches (3) selon une des revendications 1 à 8, dans lequel, en aval d'une couture initiale (3.3) connectant les couches (I, II, III) dans le sens d'extension (DR)
- dans une première couche (I), un élément d'isolation thermique (3.1), et
- dans une seconde couche (II), un élément d'isolation thermique (3.1') et un élément élastique (3.2') se succèdent et
- dans une couche extérieure (III), un élément élastique (3.2) et un élément d'espacement (3.4) sont disposés dans n'importe quel ordre et
- une couture terminale (3.3') connectant les couches reliées simplement la couche extérieure (III) et la seconde couche (II), et
- les éléments voisins à l'intérieur de la couche extérieure (III) et la seconde couche (II) étant respectivement connectés entre eux dans le sens d'extension (DR).

12. Pièce d'habillement (4), comprenant un certain nombre de dispositifs à couches (1, 2, 3) selon une des revendications précédentes.

13. Procédé de fabrication d'un dispositif à couches souple(1, 2, 3) selon une des revendications 1 à 11, dans lequel,
- dans une première étape, différentes couches (I, II, III) de composants (1.1, 1.1', 1.1", 2.1, 2.1', 3.1, 3.1',1.2, 1.2', 2.2, 2.2', 3.2, 3.2', 1.4) et,
- dans une seconde étape, les différentes couches (I, II, III) sont assemblées, de préférence cousues/ou collées et/ou soudées.

14. Procédé de fabrication d'une pièce d'habillement (4) selon la revendication 12, dans lequel un certain nombre de dispositifs à couches souples (1, 2, 3) selon une des revendications 1 à 11 et en option des parties de vêtements sont assemblées, de préférence cousues/ou collées et/ou soudées.

15. Utilisation d'un certain nombre de dispositifs à couches souples (1, 2, 3) selon une des revendications 1 à 11 pour l'isolation thermique dans des pièces d'habillement (4), les dispositifs à couches souples (1, 2, 3) étant disposés de préférence dans des zones d'extension de la pièce d'habillement (4).
